# EUROPEAN PATENT APPLICATION

(11) **EP 4 534 288 A1**
(43) Date of publication of application: **09.04.2025**
(21) Application number: 23811884.8
(22) Date of filing: 25.05.2023
(51) Int. Cl.: B32B 27/32, B32B 27/00, C08F 8/30, C08F 10/00, C09J 7/35, C09J 123/02

(54) **LAMINATE AND METHOD FOR MANUFACTURING LAMINATE**

(30) Priority: 26.05.2022 JP 2022086336; 26.05.2022 JP 2022086338
(71) Applicant: Mitsui Chemicals, Inc., Tokyo 104-0028 (JP)
(72) Inventor: ICHIKAWA, Tatsuya, Sodegaura-shi, Chiba 299-0265 (JP); MIZOBUCHI, Yusuke, Sodegaura-shi, Chiba 299-0265 (JP); GOTO, Yuuya, Sodegaura-shi, Chiba 299-0265 (JP); HARADA, Katsuyoshi, Sodegaura-shi, Chiba 299-0265 (JP)
(74) Representative: Hoffmann Eitle
(86) International application number: PCT/JP2023/019517
(87) International publication number: WO 2023/229012

(57) **Abstract**

One embodiment of the present invention relates to a laminate or a method for manufacturing a laminate, the laminate includes a layer (A) including at least one resin selected from the group consisting of a fluororesin, LCP, an ABS-based resin, and a polyketone-based resin and an adhesive layer (B) including an adhesive composition, at least a part of the adhesive layer (B) is in contact with the layer (A), the adhesive composition contains a graft-modified product of at least one base polymer selected from polyolefins by a carbodiimide monomer having a carbodiimide group and a polymerizable double bond and contains 0.1 to 50 mmol of the carbodiimide group per 100 g of the adhesive composition, and the density of the adhesive composition is 0.870 to 0.940 g/cm³.

## Description

### Technical Field

One embodiment of the present invention relates to a laminate and a method for manufacturing a laminate.

### Background Art

Fluororesins such as polytetrafluoroethylene, tetrafluoroethylene/perfluoro(alkyl vinyl ether)-based copolymers, and ethylene/tetrafluoroethylene-based copolymers are excellent in, for example, heat resistance, chemical resistance, oil resistance, weather resistance, gas barrier properties, fuel barrier properties, mold releasability, non-adhesive properties, and stain resistance, and are being used in various fields such as the semiconductor industry or the automotive industry. Due to the requirement of, for example, mechanical strength improvement and cost reduction of fluororesins in association with the spread of the applications, studies are underway regarding multilayer laminates of a fluororesin and a thermoplastic resin having an excellent mechanical strength other than fluororesins.

Liquid crystal polymers (hereinafter, also referred to as "LCPs") are excellent in terms of, for example, chemical resistance and gas barrier properties, and the application thereof to, for example, container packaging materials and automobile gasoline tanks is being expected. However, generally, LCPs are likely to be highly oriented in the flow direction during melting and have a defect in strength being high in the molding direction, but weak in a direction substantially perpendicular to the molding direction. In addition, due to the high price, there are ongoing studies regarding the use of LCPs as a laminate with another resin.

Acrylonitrile-butadiene-styrene copolymer-based resins (hereinafter, also referred to as "ABS-based resins") are excellent in, for example, mechanical strength, rigidity, heat resistance, chemical resistance, oil resistance, transparency, and low-temperature impact resistance, and are widely used as packaging materials and coating materials for, for example, films, sheets, and bottles, or as decorative materials for, for example, wallpaper, taking advantage of these properties.

Polyketone-based resins have excellent gas barrier properties and are thus expected as food preservation or food packaging materials. Polyketone-based resins themselves are poor in heat sealing properties and impact strength and are thus considered to be desirably used as a laminate with another resin such as a polyolefin.

However, it is known that functional groups that are present on the resin surfaces of fluororesins and LCPs all have poor reactivity with functional groups that are present on the surfaces of other resins (for example, conventionally known maleic anhydride-modified resins) and thus have poor adhesion to other resins. Particularly, among resins, LCPs are known to have a low surface free energy and be thus poor particularly in adhesion to other resins.

For these reasons, fluororesins and LCPs have limitations on being used as a laminate with a different material.

In addition, it is known that functional groups that are present in ABS-based resins or polyketone-based resins are poor particularly in reactivity with other resins and are thus poor particularly in adhesion.

Therefore, it is limited to use ABS-based resins or polyketone-based resins as a laminate with a different material, and ABS-based resins or polyketone-based resins are usually considered to be difficult to select as a resin being used as a laminate with a different material.

In order to solve such problems, Patent Literature 1 discloses a multilayer laminate having an excellent interlayer adhesive strength and having a laminate structure in which a layer consisting of a fluororesin containing an acid anhydride residue and a layer consisting of an aminemodified thermoplastic resin are directly laminated together.

In addition, Patent Literature 2 discloses, as an adhesive resin having excellent adhesion to LCPs, a modified polyolefin obtained by graft-polymerizing a predetermined polyolefin with an epoxy group-containing ethylenically unsaturated monomer and an adhesive resin composition containing the modified polyolefin.

In addition, Patent Literature 3 discloses a laminate which is formed by performing melt-coextrusion on a thermoplastic resin such as an ABS-based resin and a polyolefin-based resin and in which suppression of uneven brightness and a certain adhesive strength are both satisfied by making a protective film consisting of the polyolefin-based resin satisfy a predetermined parameter.

In addition, Patent Literature 4 discloses a laminate in which a polyketone layer and a predetermined polymethylpentene resin layer are made to favorably adhere to each other by providing an adhesive layer containing a predetermined component between the polymethylpentene resin layer and the polyketone layer.

### Citation List

### Patent Literature

[Patent Literature 1] WO2005/068191
[Patent Literature 2] WO2003/078488
[Patent Literature 3] JP2013-184466A
[Patent Literature 4] WO2020/145239

### Summary of Invention

However, due to high-level physical properties required in recent years, in laminates of a layer containing at least one resin selected from the group consisting of a fluororesin, LCP, an ABS-based resin, and a polyketone-based resin and an adhesive layer, there is a desire to realize a laminate having a higher adhesive strength than those of the laminates described in Patent Literature 1 to 4.

One embodiment of the present invention provides a laminate having an excellent adhesive strength between a layer containing at least one resin selected from the group consisting of a fluororesin, LCP, an ABS-based resin, and a polyketone-based resin and an adhesive layer and a manufacturing method therefor.

### Solution to Problem

Configuration examples of the present invention are as follows:
[1] A laminate comprising: a layer (A) comprising at least one resin selected from the group consisting of a fluororesin, a liquid crystal polymer, an acrylonitrile/butadiene/styrene copolymer-based resin, and a polyketone-based resin; and an adhesive layer (B) comprising an adhesive composition,
   wherein at least a part of the adhesive layer (B) is in contact with the layer (A), and
   the adhesive composition satisfies the following requirements (i) to (iii):
      (i) a graft-modified product of at least one base polymer selected from polyolefins by a carbodiimide monomer having a carbodiimide group and a polymerizable double bond is contained;
      (ii) 0.1 to 50 mmol of the carbodiimide group is contained per 100 g of the adhesive composition; and
      (iii) a density is 0.870 to 0.940 g/cm³.
[2] The laminate according to [1], wherein the carbodiimide monomer is at least one monomer selected from the group consisting of a compound represented by the following formula (1) and a compound represented by the following formula (2), 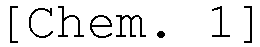 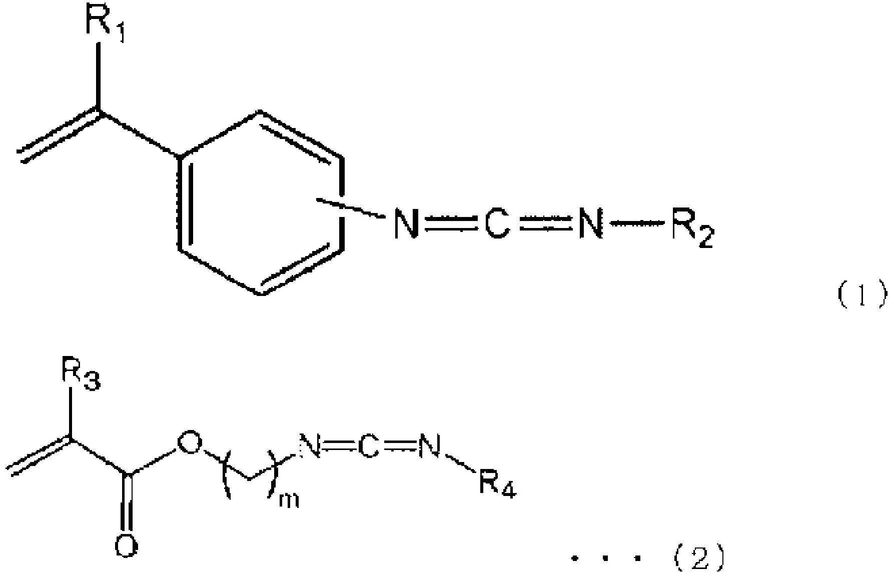 wherein in the formula (1), R₁ is a hydrogen atom or a methyl group, and R₂ is an alkyl group or aryl group optionally having a substituent, and
   in the formula (2), R₃ is a hydrogen atom or a methyl group, R₄ is an alkyl group or aryl group optionally having a substituent, and m is an integer of 2 or more.
[3] The laminate according to [1] or [2], wherein the layer (A) consists of a fluororesin.
[4] The laminate according to [3], wherein the fluororesin is a modified fluororesin modified with an acid.
[5] The laminate according to [1] or [2], wherein the layer (A) consists of a liquid crystal polymer.
[6] The laminate according to [1] or [2], wherein the layer (A) consists of an acrylonitrile/butadiene/styrene copolymer-based resin.
[7] The laminate according to [1] or [2], wherein the layer (A) consists of a polyketone-based resin.
[8] The laminate according to any one of [1] to [7] obtained by co-extrusion molding, laminate molding, blow molding, or co-injection molding.
[9] A method for manufacturing a laminate,
   wherein the laminate has a layer (A) comprising at least one resin selected from the group consisting of a fluororesin, a liquid crystal polymer, an acrylonitrile/butadiene/styrene copolymer-based resin, and a polyketone-based resin and an adhesive layer (B) comprising an adhesive composition,
   at least a part of the adhesive layer (B) is in contact with the layer (A),
   the manufacturing method comprises a step of performing co-extrusion molding, laminate molding, blow molding, or co-injection molding on a resin composition containing at least one resin selected from the group consisting of a fluororesin, a liquid crystal polymer, an acrylonitrile/butadiene/styrene copolymer-based resin, and a polyketone-based resin and the adhesive composition, and
   the adhesive composition satisfies the following requirements (i) to (iii):
      (i) a graft-modified product of at least one base polymer selected from polyolefins by a carbodiimide monomer having a carbodiimide group and a polymerizable double bond is contained;
      (ii) 0.1 to 50 mmol of the carbodiimide group is contained per 100 g of the adhesive composition; and
      (iii) a density is 0.870 to 0.940 g/cm³.
[10] The method for manufacturing a laminate according to [9], wherein the carbodiimide monomer is at least one monomer selected from the group consisting of a compound represented by the following formula (1) and a compound represented by the following formula (2), 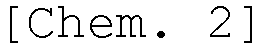 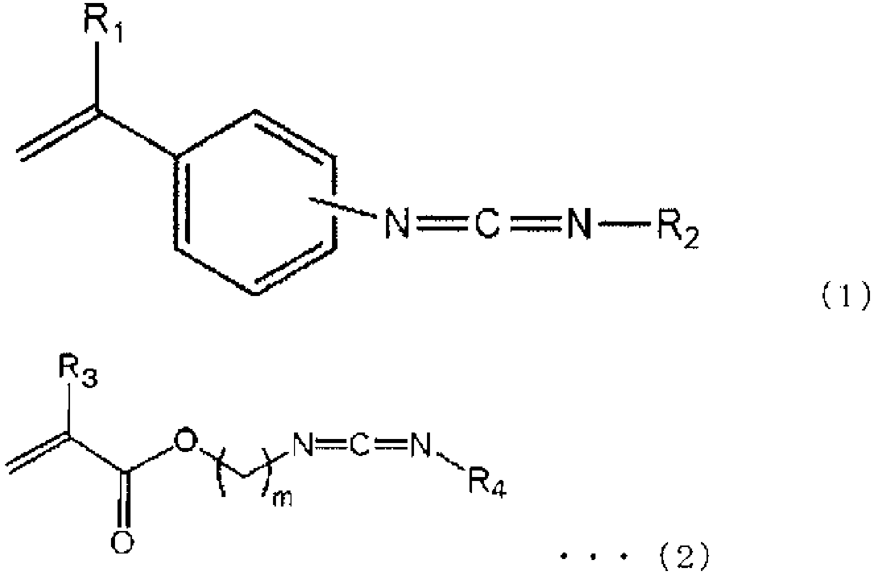 wherein in the formula (1), R₁ is a hydrogen atom or a methyl group, and R₂ is an alkyl group or aryl group optionally having a substituent, and
   in the formula (2), R₃ is a hydrogen atom or a methyl group, R₄ is an alkyl group or aryl group optionally having a substituent, and m is an integer of 2 or more.
[11] The method for manufacturing a laminate according to [9] or [10], wherein the layer (A) consists of a fluororesin.
[12] The method for manufacturing a laminate according to [11], wherein the fluororesin is a modified fluororesin modified with an acid.
[13] The method for manufacturing a laminate according to [9] or [10], wherein the layer (A) consists of a liquid crystal polymer.
[14] The method for manufacturing a laminate according to [9] or [10], wherein the layer (A) consists of an acrylonitrile/butadiene/styrene copolymer-based resin.
[15] The method for manufacturing a laminate according to [9] or [10], wherein the layer (A) consists of a polyketone-based resin.

### Advantageous Effect of Invention

According to one embodiment of the present invention, it is possible to provide a laminate having an excellent adhesive strength between a layer containing at least one resin selected from the group consisting of a fluororesin, a liquid crystal polymer, an acrylonitrile/butadiene/styrene copolymer-based resin, and a polyketone-based resin and an adhesive layer and a manufacturing method therefor.

### Description of Embodiments

### <<Laminate>>

A laminate according to one embodiment of the present invention comprises a layer (A) comprising at least one resin selected from the group consisting of a fluororesin, a liquid crystal polymer, an acrylonitrile/butadiene/styrene copolymer-based resin, and a polyketone-based resin and an adhesive layer (B) comprising an adhesive composition, and at least a part of the layer (B) is in contact with the layer (A).

Since the laminate has the layer (B), it is possible to obtain a laminate which is excellent in interlayer adhesion and in which the interlayer adhesive strength is less likely to decrease.

The laminate is not particularly limited as long as the laminate comprises the layer (A) and the layer (B), may comprise two or more layers of the layer (A), and may comprise two or more layers of the layer (B). When two or more layers of the layer (A) are comprised, these layers may be the same layer or may be different layers. Similarly, when two or more layers of the layer (B) are comprised, these layers may be the same layer or may be different layers.

As the laminate, a laminate comprising the layer (A) and the layer (B), in particular, a laminate consisting of the layer (A) and the layer (B), or a laminate comprising the layer (A), the layer (B), and the layer (A) in this order, in particular, a laminate in which the layer (A), the layer (B), and the layer (A) are laminated in this order is preferable.

The laminate comprising the layer (A) and the layer (B) may be, for example, a laminate comprising the layer (A), the layer (B), and a layer (C) in this order.

The layer (C) is not particularly limited as long as the layer (C) is a layer other than the layer (A) and the layer (B), and examples thereof include layers comprising or consisting of: metal; glass; wood; paper; cloth; a thermoplastic resin such as polyester, polyphenylene sulfide, polyamide, polyacetal, polycarbonate, poly(meth)acrylate, an olefin polymer, polystyrene, rubber, a biomass plastic, or an engineering plastic other than these; or a thermosetting resin.

The laminate is not limited to a laminate film (sheet), and may have any of various known shapes such as a hollow container, a cup, and a tray.

The laminate is preferably a laminate obtained by co-extrusion molding, laminate molding, blow molding, or a co-injection molding, from the viewpoint of, for example, easily obtaining a laminate having an excellent adhesive strength.

### <Layer (A)>

The layer (A) is not particularly limited as long as the layer (A) comprises at least one resin selected from the group consisting of a fluororesin, LCP, an ABS-based resin, and a polyketone-based resin, and is preferably a layer consisting of a fluororesin, LCP, an ABS-based resin, or a polyketone-based resin (alone).

The fluororesin, LCP, ABS-based resin, and polyketone-based resin may be resins for which only a biomass-derived raw material is used as a raw material thereof, resins for which only a fossil fuel-derived raw material is used as a raw material thereof, or resins for which both a biomass-derived raw material and a fossil fuel-derived raw material are used as raw materials thereof.

The fluororesin, LCP, ABS-based resin, and polyketone-based resin are preferably resins for which a biomass-derived raw material is used, from the viewpoint of environmental impact reduction (mainly greenhouse gas reduction).

The fluororesin is not particularly limited, and examples thereof include polymers of fluorine-containing monomers, copolymers of fluorine-containing monomers, and copolymers of a fluorine-containing monomer and a monomer other than fluorine-containing monomers.

The fluororesin may be used alone or two or more kinds thereof may be used.

Examples of the fluorine-containing monomer include fluorine-containing olefins such as tetrafluoroethylene (hereinafter, also referred to as "TFE"), trifluoroethylene, vinylidene fluoride (hereinafter, also referred to as "VDF"), vinyl fluoride, chlorotrifluoroethylene (hereinafter, also referred to as "CTFE"), hexafluoropropylene (hereinafter, also referred to as "HFP"), and compounds represented by the formula: CF₂=CFRf (wherein Rf is a polyfluoroalkyl group having 2 to 10 carbon atoms) and CH₂=CX(CF₂)ₙY (wherein X and Y are each independently a hydrogen atom or a fluorine atom, and n is an integer of 2 to 8); perfluoro(alkyl vinyl ethers) such as CF₂=CFO(CF₂)₂F and CF₂=CFO(CF₂)₃F (hereinafter, also referred to as "PPVE"); and hydrogen atom-containing (polyfluoroalkyl)trifluorovinyl ethers such as CF₂=CFOCH₂CF₃. One or more selected from the group consisting of TFE, VDF, PPVE, and CH₂=CX(CF₂)ₙY are preferable. TFE is more preferable.

The fluorine-containing monomer may be used alone or two or more kinds thereof may be used.

Examples of the monomer other than fluorine-containing monomers include hydrocarbon-based olefins such as ethylene (hereinafter, also referred to as "E"), propylene, and butene; vinyl ethers such as ethyl vinyl ether, butyl vinyl ether, methyl vinyloxy butyl carbonate, and glycidyl vinyl ether; and vinyl esters such as vinyl acetate, vinyl chloroacetate, vinyl butanoate, vinyl pivalate, vinyl benzoate, and vinyl crotonate. Ethylene is preferable.

The monomer other than fluorine-containing monomers may be used alone or two or more kinds thereof may be used.

Specific examples of the fluororesin include TFE/E-based copolymers, TFE/HFP-based copolymers, TFE/PPVE-based copolymers, TFE/VDF/HFP-based copolymers, TFE/VDF-based copolymers, and CTFE/E-based copolymers.

The fluororesin may be a modified fluororesin and is preferably a modified fluororesin from the viewpoint of, for example, further exhibiting the effects of the present invention. The modified fluororesin is not particularly limited, and examples thereof include acid-modified fluororesins.

Examples of the acid-modified fluororesins include resins obtained by modifying the fluororesin with at least one selected from an unsaturated carboxylic acid and derivatives thereof (particularly, an acid anhydride).

Examples of the unsaturated carboxylic acid include acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2.2.1]hept-2-ene-5,6-dicarboxylic acid.

Examples of the derivatives of the unsaturated carboxylic acid include maleic anhydride, itaconic anhydride, citraconic anhydride, tetrahydrophthalic anhydride, and bicyclo[2.2.1]hept-2-ene-5,6-dicarboxylic anhydride.

As the unsaturated carboxylic acid and the derivative thereof, among these, maleic anhydride is preferable.

The content of an acid group and an acid anhydride group in the acid-modified fluororesin is preferably 0.01 to 3 mol%, more preferably 0.05 to 2 mol%, and still more preferably 0.1 to 1 mol% based on 100 mol% of the total structural units that configure the fluororesin.

The LCP is not particularly limited, and examples thereof include aromatic polyesters and/or aromatic polyester-amides, which are usually referred to as thermotropic liquid crystal polymers.

The LCP may be used alone or two or more kinds thereof may be used.

Specific examples of the LCP include
(1) a reaction product of an aromatic dicarboxylic acid, an aromatic diol, and an aromatic hydroxycarboxylic acid used as raw materials,
(2) a reaction product of different aromatic hydroxycarboxylic acids used as raw materials,
(3) a reaction product of an aromatic dicarboxylic acid and a nuclear substituted aromatic diol used as raw materials, and
(4) a reaction product obtained by reacting a polyester such as polyethylene terephthalate with, for example, an aromatic hydroxycarboxylic acid.

Instead of these aromatic dicarboxylic acid, aromatic diol, and aromatic hydroxycarboxylic acid, ester-forming derivatives thereof may be used.

The LCP is preferably a liquid crystal polymer including a structural unit derived from one or more of the following monomers, usually, at least two selected from the following monomers.

Terephthalic acid, isophthalic acid, 1,4-hydroquinone, resorcinol, 4-aminobenzoic acid, 4-hydroxybenzoic acid, 4-aminophenol, 1,4-phenylenediamine, 4,4'-biphenol, 4,4'-biphenyldicarboxylic acid, 6-hydroxy-2-naphthoic acid, 2,6-naphthalenedicarboxylic acid, and 2,6-dihydroxynaphthalene.

The ABS-based resin is a collective term of resins obtained by performing copolymerization using acrylonitrile, butadiene, and styrene as raw material monomers.

In the ABS-based resin, as a raw material monomer that is used to synthesize the resin, a resin for which a monomer such as methacrylonitrile, ethacrylonitrile, or fumaronitrile (alternative to acrylonitrile) is used is also contained in addition to acrylonitrile or instead of acrylonitrile.

In addition, in the ABS-based resin, as a raw material monomer that is used to synthesize the resin, a resin for which a monomer (alternative to butadiene) such as acrylic rubber mainly containing butyl (meth)acrylate, chlorinated polyethylene, or ethylene/propylene/diene rubber (EPDM), which is an ethylene-based rubber, is used is also contained in addition to butadiene or instead of butadiene.

Furthermore, in the ABS-based resin, as a raw material monomer that is used to synthesize the resin, a resin for which a monomer (alternative to styrene) such as α-methylstyrene, vinyltoluene, dimethylstyrene, chlorostyrene, or vinylnaphthalene is used is also contained in addition to styrene or instead of styrene.

Therefore, in the present specification, the ABS-based resin is a concept including, for example, an AES-based resin, an ASA-based resin, and an ACS-based resin.

The ABS-based resin may be used alone or two or more kinds thereof may be used.

The proportion of the structural unit derived from each component in the ABS-based resin is not particularly limited, but the content of the structural unit derived from acrylonitrile or the alternative to acrylonitrile is preferably 10% to 89% by mass, the content of the structural unit derived from butadiene or the alternative to butadiene is preferably 1% to 80% by mass, and the content of the structural unit derived from styrene or the alternative to styrene is preferably 10% to 89% by mass.

As the ABS-based resin, resins obtained by synthesis by a known method such as bulk polymerization, solution polymerization, bulk suspension polymerization, suspension polymerization, or emulsion polymerization may be used, or commercially available resins may be used.

Examples of the commercially available products include KRALASTIC (manufactured by Nippon A&L Inc.), SANTAC (manufactured by Nippon A&L Inc.), CYCOLAC (manufactured by Techno-UMG Co., Ltd.), and TECHNO ABS (manufactured by Techno Polymer Co., Ltd.).

The polyketone-based resin is a resin other than the fluororesin, LCP, and the ABS-based resin.

Examples of the polyketone-based resin include linear polymers in which a carbonyl group (CO) and a divalent organic group derived from an ethylenically unsaturated compound or a divalent organic group formed by linking two or more of the organic groups alternately bond to each other, and usually include resins represented by the following formula (3).

The polyketone-based resin can be obtained by, for example, polymerizing carbon monoxide and an ethylenically unsaturated compound by a known method.

The polyketone-based resin may be used alone or two or more kinds thereof may be used.

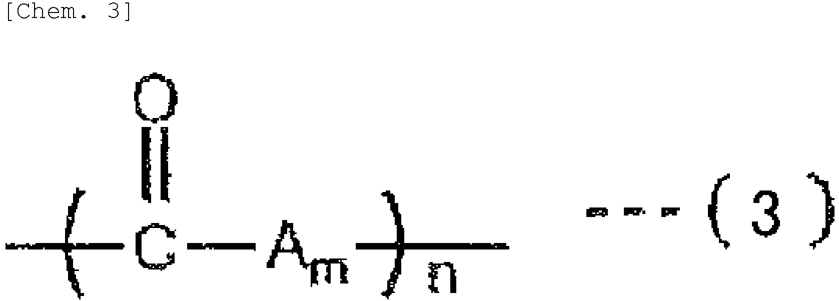

In the formula (3), A is a divalent organic group derived from an ethylenically unsaturated compound, and m is an integer of 1 to 6. n is an integer of 2 or more and preferably an integer of 2 to 6000.

Examples of the ethylenically unsaturated compound include α-olefins having 2 to 12 carbon atoms, such as ethylene, propylene, 1-butene, isobutylene, and 1-pentene, preferably linear α-olefins having 2 to 6 carbon atoms, more preferably ethylene alone or ethylene and propylene;
dienes such as butadiene, isoprene, and 2-chlorobutadiene-1,3, or halides thereof;
vinylidenes such as vinylidene chloride or halides thereof;
vinyl esters, such as vinyl acetate, vinyl chloroacetate, dimethylvinyl acetate, and trimethylvinyl acetate or halides thereof;
vinyl halides such as tetrafluoroethylene and chloroethylene;
vinyl acetals such as ketene methyl(vinyl) acetal;
vinyl ketones such as vinyl methyl ketone and vinyl ethyl ketone;
styrene, such as styrene, chlorostyrene, and α-methylstyrene or derivatives thereof;
acrylic acid and methacrylic acid, esterified products thereof, amidated products thereof, nitrilized products thereof, and acid halides; and
vinyl esters of an unsaturated carboxylic acids, such as vinyl hexenoate or vinyl crotonate.

As the ethylenically unsaturated compound, among these, a linear α-olefin having 2 to 6 carbon atoms is preferably contained, and ethylene alone or ethylene and propylene are particularly preferable.

Therefore, the polyketone-based resin is preferably an ethylene/carbon monoxide copolymer or an ethylene/propylene/carbon monoxide copolymer.

The ethylenically unsaturated compound may be used alone or two or more kinds thereof may be used. In the latter case, ethylene and a linear α-olefin having 3 to 6 carbon atoms, particularly, ethylene and propylene are preferably used in combination. In this case, the mole ratio of ethylene/the linear α-olefin having 3 to 6 carbon atoms is preferably larger than 1 and more preferably 2 to 30.

As the polyketone-based resin, a commercially available product may be used.

Examples of the commercially available product include AKROTEK: PK-HM (manufactured by AKRO-PLASTIC GmbH) and Carilon (manufactured by Shell plc).

The layer (A) may contain, as necessary, an additive such as a phenol antioxidant, a phosphorus antioxidant, a sulfur antioxidant, a metal compound, or a metal salt of a higher fatty acid, which are usually added to resins, to an extent that the object of the present invention is not impaired.

The additive may be an additive for which only a biomass-derived raw material is used as a raw material thereof, an additive for which only a fossil fuel-derived raw material is used, or an additive for which both a biomass-derived raw material and a fossil fuel-derived raw material are used.

The thickness of the layer (A) is not particularly limited and may be appropriately selected depending on the application of the laminate, but is preferably 2 to 1000 µm.

### <Adhesive layer (B)>

The layer (B) is a layer comprising an adhesive composition (hereinafter, also referred to as "present composition") and can be obtained using the present composition.

The content of the present composition in the layer (B) is preferably 80% to 100% by mass and more preferably 90% to 100% by mass.

The thickness of the layer (B) is not particularly limited and may be appropriately selected depending on the application of the laminate, but is preferably 2 to 1000 µm.

### [Adhesive composition]

The present composition satisfies the following requirements (i) to (iii).
(i) A graft-modified product of at least one base polymer selected from polyolefins by a carbodiimide monomer having a carbodiimide group and a polymerizable double bond (hereinafter, also referred to as "the present modified product") is contained.
(ii) 0.1 to 50 mmol of the carbodiimide group is contained per 100 g of the present composition.
(iii) The density is 0.870 to 0.940 g/cm³.

The amount of the carbodiimide group in the present composition is 0.1 to 50 mmol, preferably 0.2 to 20 mmol, and more preferably 0.5 to 5 mmol per 100 g of the present composition.

When the amount of the carbodiimide group is within the above range, it is possible to easily obtain the present composition capable of strongly adhering to an adherend, in particular, a layer containing at least one resin selected from the group consisting of a fluororesin, LCP, an ABS-based resin, and a polyketone-based resin even in the case of adhering thereto at a low temperature at which the fluororesin, LCP, the ABS-based resin, and the polyketone-based resin do not thermally decompose.

Specifically, the amount of the carbodiimide group is measured by a method described in Examples below.

The density of the present composition measured according to JIS K 7210 is 0.870 to 0.940 g/cm³, preferably 0.880 to 0.925 g/cm³, and more preferably 0.890 to 0.920 g/cm³.

When the density is within the above range, it is possible to easily obtain the present composition capable of strongly adhering to an adherend, in particular, a layer containing at least one resin selected from the group consisting of a fluororesin, LCP, an ABS-based resin, and a polyketone-based resin even in the case of adhering thereto at a low temperature at which the fluororesin, LCP, the ABS-based resin, and the polyketone-based resin do not thermally decompose.

The melt flow rate (MFR) of the present composition measured at 190°C and 2.16 kg load according to JIS K 7210 is preferably 0.1 to 10 g/10 minutes, and more preferably 0.2 to 5 g/10 minutes.

When the MFR is within the above range, it is possible to easily form a desired laminate by a molding method such as co-extrusion molding, laminate molding, blow molding, or co-injection molding, which is preferable.

The present composition is not particularly limited as long as the present composition comprises the present modified product, and may consist only of the present modified product.

The present composition comprises the present modified product and is thus capable of forming a layer having a high adhesive strength to an adherend, in particular, a layer containing at least one resin selected from the group consisting of a fluororesin, LCP, an ABS-based resin, and a polyketone-based resin, even with a short sealing time.

Since the present modified product has higher reactivity with a group present in, for example, a fluororesin, LCP, an ABS-based resin, and a polyketone-based resin as compared with a graft-modified product by glycidyl(meth)acrylate, an acid, or an acid anhydride, the present composition comprising the present modified product is remarkably excellent in adhesion to layers containing at least one resin selected from the group consisting of a fluororesin, LCP, an ABS-based resin, and a polyketone-based resin.

The present modified product is not a block copolymer or a random copolymer of an olefin monomer such as ethylene or propylene and the carbodiimide monomer but a graft-modified product, and the use of the present modified product thus makes the present composition exhibit the above effects.

The kind of the present modified products that are used in the present composition may be one or more.

The content of the present modified product in the present composition is not particularly limited, but is usually 0.5% by mass or more, preferably 1% by mass or more, and usually 60% by mass or less, preferably 50% by mass or less, from the viewpoint of, for example, molding processability and controllability of adhesive ability, and economic efficiency.

The present composition preferably comprises the present modified product and one or more olefin polymers other than the present modified product.

The olefin polymer that may be used in the present composition is not particularly limited as long as it is a polymer containing an olefin as a raw material, and various known olefin polymers can be used. Specific examples thereof include homopolymers or copolymers of α-olefins such as ethylene, propylene, 1-butene, 1-hexene, 4-methyl-1-pentene, and 1-octene (for example: high-pressure low-density polyethylene, linear low-density polyethylene (LLDPE), medium-density polyethylene, high-density polyethylene, polypropylene, poly-1-butene, poly-4-methyl-1-pentene, low-crystalline or amorphous ethylene-propylene random copolymers, ethylene-1-butene random copolymers, and propylene-1-butene random copolymers), ethylene-vinyl acetate copolymers (EVA) or saponified products thereof, ethylene-(meth)acrylic acid copolymers or metal salts (ionomers) thereof, ethylene-cyclic olefin copolymers, and polymers obtained by graft-modifying these (co)polymers with a polar compound such as maleic acid or a silane compound.

When the present composition contains a certain present modified product, as the olefin polymer, among these, the same polymer as the base polymer used for the synthesis of the present modified product is preferable, from the viewpoint of, for example, making it possible to easily obtain the present composition having excellent compatibility and further exhibiting a desired effect.

The raw material (for example, olefin) of the olefin polymer may be a polymer for which only a biomass-derived raw material is used, a polymer for which only a fossil fuel-derived raw material is used, or a polymer for which both a biomass-derived raw material and a fossil fuel-derived raw material are used.

The olefin polymer is preferably a polymer for which a biomass-derived raw material is used, from the viewpoint of environmental impact reduction (mainly greenhouse gas reduction).

In the present specification, the biomass-derived raw material is a raw material for which, for example, any plant-derived or animal-derived (renewable) natural raw material, including a fungus, a yeast, algae, and a bacterium, or a residue thereof, is used as a raw material, and examples thereof include raw materials containing, as carbon, a ¹⁴C isotope in a proportion of about 1 × 10⁻¹² and having a biomass carbon concentration (unit: pMC) measured according to ASTM D 6866 of about 100 pMC. The biomass-derived raw material can be obtained by, for example, a conventionally known method.

For certain polymers, as long as the manufacturing conditions of the polymers, for example, the catalyst for polymerization, the polymerization process, and the polymerization temperature are the same, the molecular structures of polymers containing the biomass-derived raw material are the same as those of polymers composed of a fossil fuel-derived raw material, except that the ¹⁴C isotope is contained in a proportion of about 1 × 10⁻¹² to 1 × 10⁻¹⁴. Therefore, it is considered that performance does not vary between polymers containing the biomass-derived raw material and polymers composed of a fossil fuel-derived raw material.

When the present composition contains the olefin polymer, the content of the olefin polymer in the present composition is not particularly limited, but is usually 40% by mass or more, preferably 50% by mass or more, and usually 99.5% by mass or less, preferably 99% by mass or less, from the viewpoint of, for example, molding processability and controllability of adhesive ability, and economic efficiency.

Various additives other than the present modified product and the olefin polymer may be added to the present composition as required to an extent that the object of the present invention is not impaired.

Examples of the additive include a softener, a stabilizer, a filler, an antioxidant, a crystal nucleating agent, a wax, a thickener, a mechanical stability-imparting agent, a leveling agent, a wetting agent, a film-forming aid, a crosslinking agent, a preservative, a rust inhibitor, a pigment, a dispersant, an antifreezing agent, an antifoaming agent, a tackifier, another thermoplastic polymer, water, and an organic solvent, and each of these may be used alone or two or more.

The additive may be an additive for which only a biomass-derived raw material is used as a raw material thereof, an additive for which only a fossil fuel-derived raw material is used, or an additive for which both a biomass-derived raw material and a fossil fuel-derived raw material are used.

The present composition can be used in various known forms of adhesives, for example, as an aqueous dispersion type adhesive, an organic solvent type adhesive, and a hot melt type adhesive.

### <Present modified product>

The present modified product is a graft-modified product of at least one base polymer selected from polyolefins by a carbodiimide monomer having a carbodiimide group and a polymerizable double bond, in other words, a graft-modified product in which at least one base polymer selected from polyolefins is graft-modified with a carbodiimide monomer having a carbodiimide group and a polymerizable double bond. It can also be said that the present modified product is a graft-modified product containing at least one base polymer moiety selected from polyolefins and a graft moiety derived from a carbodiimide monomer having a carbodiimide group and a polymerizable double bond.

The presence of the present modified product in the layer (B) can be determined by infrared spectroscopic analysis.

The graft ratio in the present modified product is preferably 0.3 to 7% by mass, and more preferably from 0.5 to 5% by mass, from the viewpoints that the present modified product can be easily synthesized, a graft-modified product having more excellent adhesion can be easily obtained, and the obtained graft-modified product does not become too hard.

The graft ratio is the mass of the structure derived from the carbodiimide monomer in the graft-modified product and can be determined by ¹H-NMR measurement, specifically by the method described in Examples below.

### [Carbodiimide monomer]

The carbodiimide monomer used for graft-modifying the base polymer is not particularly limited as long as it is a compound having a carbodiimide group and a polymerizable double bond, but is preferably a compound represented by the following formula (1) or (2), from the viewpoint of, for example, further exhibiting the effects of the present invention.

Two or more carbodiimide monomers may be used for graft-modification of the base polymer, but usually one carbodiimide monomer is used.

The carbodiimide monomer may be a biomass-derived monomer, may be a fossil fuel-derived monomer, or may be a monomer derived from biomass and a fossil fuel.

The carbodiimide monomer is preferably a biomass-derived monomer or a monomer derived from biomass and a fossil fuel, from the viewpoint of environmental impact reduction (mainly greenhouse gas reduction).

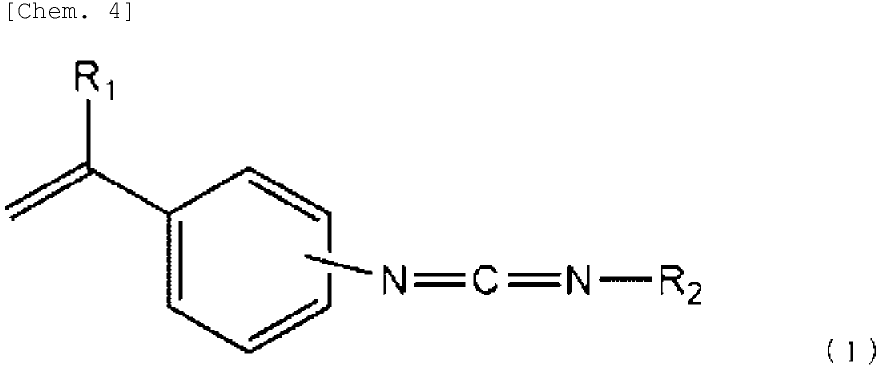

In the formula (1), R₁ is a hydrogen atom or a methyl group, and is preferably a hydrogen atom, from the viewpoint of, for example, easily obtaining the present modified product having a high graft ratio.

In the formula (1), R₂ is an alkyl group or aryl group optionally having a substituent. The alkyl group optionally having a substituent may be chain-like (may be linear or branched) or may include an alicyclic ring.

The number of carbon atoms of the alkyl group optionally having a substituent is preferably 1 or more, and more preferably 3 or more, and is preferably 20 or less, more preferably 12 or less, and still more preferably 8 or less. In addition, the number of carbon atoms of the aryl group optionally having a substituent is preferably 5 or more, and more preferably 6 or more, and is preferably 20 or less, more preferably 12 or less, and still more preferably 8 or less.

Examples of the substituent which the alkyl group and the aryl group may have include a halogen atom, a hydrocarbon group having 1 to 8 carbon atoms, an alkoxy group having 1 to 8 carbon atoms, a carboxylic acid ester group having 1 to 8 carbon atoms, a sulfonic acid ester group having 1 to 8 carbon atoms, a carbonyl group having 1 to 8 carbon atoms, an amide group having 1 to 8 carbon atoms, an amino group having 1 to 8 carbon atoms, a sulfide group having 1 to 8 carbon atoms, a phosphoric acid ester group having 1 to 8 carbon atoms, an alkylsilyl group having 1 to 8 carbon atoms, and an alkoxysilyl group having 1 to 8 carbon atoms.

Among these, the R₂ is preferably an alicyclic ring-containing aliphatic hydrocarbon group having 4 to 20 carbon atoms, and more preferably an alicyclic hydrocarbon group having 5 to 7 carbon atoms, from the viewpoint of, for example, the solubility of the carbodiimide monomer, the availability thereof, and the ease of purification of the resulting graft-modified product.

Examples of the alicyclic ring include a cyclobutyl ring, a cyclopentyl ring, a cyclohexyl ring, a cycloheptyl ring, and these rings having a hydrocarbon group. Further, the alicyclic ring may be a polycyclic ring such as an adamantyl ring and a methyladamantyl ring.

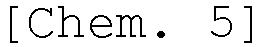

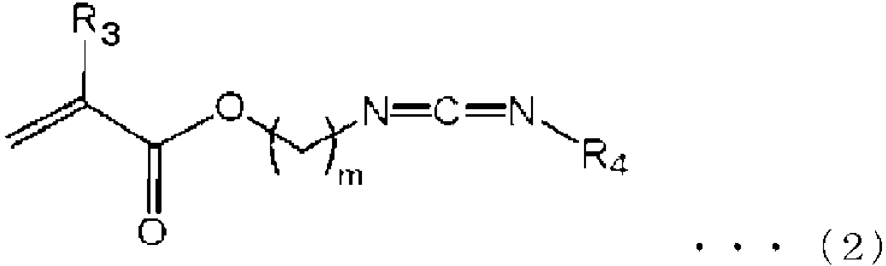

In the formula (2), R₃ is a hydrogen atom or a methyl group and preferably a methyl group from the viewpoint of, for example, easily obtaining the present composition having an excellent adhesive strength to layers containing at least one resin selected from the group consisting of a fluororesin, LCP, an ABS-based resin, and a polyketone-based resin.

In the formula (2), R₄ is an alkyl group or aryl group optionally having a substituent. The alkyl group optionally having a substituent may be chain-like (may be linear or branched) or may include an alicyclic ring.

The number of carbon atoms of the alkyl group optionally having a substituent is preferably 1 or more, and more preferably 3 or more, and is preferably 20 or less, more preferably 12 or less, and still more preferably 8 or less. In addition, the number of carbon atoms of the aryl group optionally having a substituent is preferably 5 or more, and more preferably 6 or more, and is preferably 20 or less, more preferably 12 or less, and still more preferably 8 or less.

Examples of the alicyclic ring include a cyclobutyl ring, a cyclopentyl ring, a cyclohexyl ring, a cycloheptyl ring, and these rings having a hydrocarbon group. Further, the alicyclic ring may be a polycyclic ring such as an adamantyl ring and a methyladamantyl ring.

Examples of the substituent which the alkyl group and the aryl group may have include a halogen atom, a hydrocarbon group having 1 to 8 carbon atoms, an alkoxy group having 1 to 8 carbon atoms, a carboxylic acid ester group having 1 to 8 carbon atoms, a sulfonic acid ester group having 1 to 8 carbon atoms, a carbonyl group having 1 to 8 carbon atoms, an amide group having 1 to 8 carbon atoms, an amino group having 1 to 8 carbon atoms, a sulfide group having 1 to 8 carbon atoms, a phosphoric acid ester group having 1 to 8 carbon atoms, an alkylsilyl group having 1 to 8 carbon atoms, and an alkoxysilyl group having 1 to 8 carbon atoms.

Among these, the R₄ is preferably a non-branched and ring-free alkyl group, more preferably a non-branched and ring-free alkyl group having 3 to 7 carbon atoms, from the viewpoint of, for example, easily obtaining the present composition having an excellent adhesive strength to layers containing at least one resin selected from the group consisting of a fluororesin, LCP, an ABS-based resin, and a polyketone-based resin.

In addition, the R₄ is preferably a branched and ring-free alkyl group, more preferably a branched and ring-free alkyl group having 3 to 7 carbon atoms, from the viewpoint of, for example, the stability of the carbodiimide group improving in the air and during heating, the yield increasing during the synthesis of the present modified product, and the reduction of the manufacturing cost.

When R₄ is ring-free, steric hindrance attributed to a ring structure is suppressed, and the reactivity of the carbodiimide group becomes favorable.

Suitable examples of the non-branched and ring-free alkyl group include a n-propyl group, a n-butyl group, a n-pentyl group, a n-hexyl group, a n-heptyl group, a n-octyl group, and a n-nonyl group.

Suitable examples of the branched and ring-free alkyl group include an isopropyl group, a sec-butyl group, an isobutyl group, a tert-butyl group, a 1-methylbutyl group, a 1,2-dimethylpropyl group, a 2-methylbutyl group, a 3-methylbutyl group, a 1-ethylpropyl group, a 1,1-dimethylpropyl group, a 2,2-dimethylpropyl group, a 1-methylpentyl group, a 1,2-dimethylbutyl group, a 1,3-dimethylbutyl group, a 1,2,2-trimethylpropyl group, a 2-methylpentyl group, a 2,2-dimethylbutyl group, a 2,3-dimethylbutyl group, a 2-ethylbutyl group, a 3-methylpentyl group, a 3,3-dimethylbutyl group, a 4-methylpentyl group, a 1-ethyl-2-methylpropyl group, a 1-ethylbutyl group, a 1,1-dimethylbutyl group, a 1,1,2-trimethylpropyl group, a 1-ethyl-1-methylpropyl group, a 1-methylhexyl group, a 1,2-dimethylpentyl group, a 1,3-dimethylpentyl group, a 1,4-dimethylpentyl group, a 1,2,3-trimethylbutyl group, a 1,2,2-trimethylbutyl group, a 1,3,3-trimethylbutyl group, a 2-methylhexyl group, a 2,3-dimethylpentyl group, a 2,4-dimethylpentyl group, a 2,3,3-trimethylbutyl group, a 1,1-dimethylpentyl group, a 1,1,2-trimethylbutyl group, a 1,1,3-trimethylbutyl group, a 1,1,2,2-tetramethylpropyl group, a 2,2-dimethylpentyl group, a 2,2,3-trimethylbutyl group, a 3-methylhexyl group, a 3,4-dimethylpentyl group, a 3,3-dimethylpentyl group, a 1-ethylpentyl group, a 1-ethyl-2-methylbutyl group, a 1-ethyl-3-methylbutyl group, a 1-ethyl-2,2-dimethylpropyl group, a 2-ethylpentyl group, a 2-ethyl-3-methylbutyl group, a 1-ethyl-1-methylbutyl group, a 1-ethyl-1,2-dimethylpropyl group, a 3-ethylpentyl group, a 1,1-diethylpropyl group, a 2,2-diethylpropyl group, a 1-propylbutyl group, a diisopropylmethyl group, and a 1-isopropylbutyl group.

In formula (2), m is an integer of 2 or more, and is preferably an integer of 2 to 6, more preferably an integer of 2 to 4, and particularly preferably 2, from the viewpoint of, for example, the solubility of the carbodiimide monomer, the availability thereof, and the ease of purification of the resulting graft-modified product.

### [Base polymer]

The base polymer before being graft-modified with the carbodiimide monomer is at least one polymer selected from polyolefins. Specific examples of the olefin include ethylene, propylene, 1-butene, 1-pentene, 1-hexene, 1-octene, 1-decene, and 4-methyl-1-pentene.

The polyolefin may be a homopolymer of any of these olefins, a copolymer of two or more of these olefins, or a copolymer of one or more of these olefins and one or more of the following comonomers. Among these, the polyolefin is preferably at least one polymer selected from an ethylene polymer, a propylene polymer, and a butene polymer. The polyolefin is more preferably at least one polymer selected from an ethylene polymer and a propylene polymer, from the viewpoint of, for example, excellent separability from impurities after the graft reaction, and, in the case of using a solvent in the graft reaction, excellent solubility in the solvent.

Two or more of the base polymers may be used in the present modified product, but usually one is used.

The base polymer is preferably a polymer being free of at least one active hydrogen-containing group selected from a carboxy group, an acid anhydride group, an amino group, a hydroxy group, and a thiol group, from the viewpoint of, for example, further exhibiting the effects of the present invention.

Further, the base polymer is also preferably a polymer being free of a group that is easily converted into a group having active hydrogen by, for example, water, such as a carboxylic acid derivative group such as acid halide, amide, imide, or ester, or an epoxy group, from the viewpoint of, for example, further exhibiting the effects of the present invention.

The weight average molecular weight (Mw) of the base polymer is not particularly limited, but is preferably 100,000 or more, more preferably 150,000 or more, and preferably 1,000,000 or less, more preferably 700,000 or less, from the viewpoint of, for example, the ease of synthesis of the present modified product.

The number-average molecular weight (Mn) of the base polymer is also not particularly limited, but is preferably 10,000 or more, more preferably 20,000 or more, and preferably 500,000 or less, more preferably 300,000 or less, from the same reason.

The molecular weight distribution (Mw/Mn) of the base polymer is also not particularly limited, but is preferably 1.5 or more, more preferably 2.0 or more, and is preferably 7.0 or less, more preferably 6.0 or less.

The Mw and Mn are values measured under the following conditions using HLC-8321 GPC/HT type gel permeation chromatograph (GPC) manufactured by Tosoh Corporation.
Separation column: TSKgel GMH₆-HT (two columns) and TSKgel GMH₆-HTL (two columns) (both 7.5 mm I.D. × 30 cm, manufactured by Tosoh Corporation)
Column temperature: 140°C
Mobile phase: o-dichlorobenzene (containing 0.025% dibutylhydroxytoluene (BHT))
Developing rate: 1.0 mL/min
Sample concentration: 0.1% (w/v)
Sample injection volume: 0.4 mL
Detector: Differential refractometer
Calibration of apparatus: Calibrated using monodispersed polystyrene (manufactured by Tosoh Corporation, #3std set)

The base polymer can be synthesized by a conventionally known method, or a commercially available product may be used.

The conventionally known method is not particularly limited, and examples thereof include a method using a coordination polymerization catalyst system containing a transition metal. Specific examples thereof include a method in which an olefin such as ethylene or propylene and, as necessary, a comonomer to be described below are (co)polymerized in the presence of a catalyst such as a magnesium chloride-supported titanium catalyst, a vanadium catalyst containing a soluble vanadium compound and an alkylaluminum halide compound, or a metallocene catalyst containing a metallocene compound and an organoaluminumoxy compound.

As the raw material (for example, the olefin or the monomer such as the following comonomer) of the base polymer, only a biomass-derived raw material may be used, only a fossil fuel-derived raw material may be used, or both a biomass-derived raw material and a fossil fuel-derived raw material may be used.

The base polymer is preferably a polymer for which a biomass-derived raw material is used, from the viewpoint of environmental impact reduction (mainly greenhouse gas reduction).

### [Ethylene polymer]

The ethylene polymer is not particularly limited as long as the content of a structural unit derived from ethylene in the polymer is 50% by mass or more, and may be a homopolymer of ethylene or a copolymer of ethylene and a comonomer. In the case of the copolymer, the structure is not particularly limited.

Examples of the comonomer include at least one monomer selected from propylene, an α-olefin having 4 to 20 carbon atoms, and conjugated polyenes, and among these, propylene and an α-olefin having 4 to 20 carbon atoms are preferable.

The α-olefin having 4 to 20 carbon atoms may be linear or branched, and examples thereof include 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene.

The content of the structural unit derived from the comonomer in the ethylene polymer is preferably 50% by mass or less, more preferably 30% by mass or less, and particularly preferably 20% by mass or less, from the viewpoint of, for example, the unlikelihood of blocking of pellets or powder and easy handling of pellets or powder. An ethylene polymer having a propylene-derived or butene-derived structural unit content of 50% by mass is referred to as an ethylene polymer in the present specification.

### [Propylene polymer]

The propylene polymer is not particularly limited as long as the content of a structural unit derived from propylene in the polymer is 50% by mass or more, and may be a homopolymer of propylene or a copolymer of propylene and a comonomer. The structure of these (co)polymers is not particularly limited.

Examples of the comonomer include at least one monomer selected from ethylene, an α-olefin having 4 to 20 carbon atoms, and conjugated polyenes, and among these, ethylene and an α-olefin having 4 to 20 carbon atoms are preferable.

Examples of the α-olefin having 4 to 20 carbon atoms include, for example, the same α-olefins as the α-olefins having 4 to 20 carbon atoms mentioned in the section of the ethylene polymer.

The content of the structural unit derived from the comonomer in the propylene polymer is preferably 50% by mass or less, more preferably 30% by mass or less, and particularly preferably 20% by mass or less, from the viewpoint of, for example, the unlikelihood of blocking of pellets or powder and easy handling of pellets or powder. A propylene polymer having a butene-derived structural unit content of 50% by mass is referred to as a propylene polymer in the present specification.

### [Butene polymer]

The butene polymer is not particularly limited as long as the content of a structural unit derived from butene in the polymer is 50% by mass or more, and may be a homopolymer of butene, particularly 1-butene, or a copolymer of butene (particularly 1-butene) and a comonomer. The structure of these (co)polymers is not particularly limited.

Examples of the comonomer include at least one monomer selected from ethylene, propylene, an α-olefin having 5 to 20 carbon atoms, and conjugated polyenes, and among these, ethylene, propylene, and an α-olefin having 5 to 20 carbon atoms are preferable.

Examples of the α-olefin having 5 to 20 carbon atoms include, for example, the same α-olefins as the α-olefins having 5 to 20 carbon atoms mentioned in the section of the ethylene polymer.

The content of the structural unit derived from the comonomer in the butene polymer is preferably 50% by mass or less, more preferably 30% by mass or less, and particularly preferably 20% by mass or less, from the viewpoint of, for example, the unlikelihood of blocking of pellets or powder and easy handling of pellets or powder.

### <Method of synthesizing present modified product>

There are no particular limitations on the method of synthesizing the present modified product, as long as a graft-modified product obtained by graft-modifying the base polymer with the carbodiimide monomer can be obtained, the method is preferably a method in which a radical initiator and the carbodiimide monomer are added to a solution in which the base polymer is dissolved or dispersed in a solvent, preferably a solution in which the base polymer is dissolved in an organic solvent, to cause a reaction (graft reaction), from the viewpoint of, for example, easily synthesizing the present modified product. When a reaction apparatus having a stirring capability capable of homogeneously fluidizing the base polymer is used, the solvent may not be used.

According to the above method, since graft polymerization occurs, a graft-modified product is obtained.

The amount of the carbodiimide monomer used in the graft reaction is preferably 10 to 1000 mol, and more preferably from 10 to 800 mol, based on 1 mol of the base polymer, from the viewpoint, for example, that the present modified product having a graft ratio within the above range can be easily obtained, and the formation of a polymer of the carbodiimide monomer itself (hereinafter, also referred to as "non-grafted polymer") can be suppressed.

Examples of the radical initiator include organic peroxides and azo compounds, and specific examples thereof include organic peroxides such as benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy) hexane, tert-butyl perbenzoate, tert-butyl perphenylacetate, tert-butyl perisobutyrate, tert-butyl per-sec-octoate, tert-butyl perpivalate, cumyl perpivalate, tert-butyl perdiethylacetate, and tert-butylperoxyisopropyl monocarbonate(tert-butylperoxyisopropyl monocarbonate); and azo compounds such as azobisisobutyronitrile and dimethylazoisobutyrate. Among these, organic peroxides such as dicumyl peroxide, di-tert-butyl peroxide, 2,5-dimethyl-2,5-di(tert-butylperoxy)hexyne-3, 2,5-dimethyl-2,5-di(tert-butylperoxy) hexane, 1,4-bis(tert-butylperoxyisopropyl) benzene, and tert-butylperoxyisopropyl monocarbonate are preferable.

The radical initiator may be used alone or two or more kinds thereof may be used.

The amount of the radical initiator to be used in the graft reaction is preferably 0.01 mol or more, more preferably 0.05 mol or more, and preferably 0.7 mol or less, more preferably 0.5 mol or less, based on 1 mol of the carbodiimide monomer, from the viewpoint, for example, that the graft reaction efficiently occurs and the present modified product having a graft ratio in the above range can be easily obtained.

The organic solvent is preferably an organic solvent that does not significantly inhibit the graft reaction of the carbodiimide monomer and has affinity for the base polymer in a temperature range in which the graft reaction is performed. Specific examples of such an organic solvent include aromatic hydrocarbon solvents such as benzene, toluene, and xylene; aliphatic hydrocarbon solvents such as pentane, hexane, heptane, octane, nonane, and decane; alicyclic hydrocarbon solvents such as cyclohexane, methylcyclohexane, and decahydronaphthalene; chlorinated hydrocarbon solvents such as chlorobenzene, dichlorobenzene, trichlorobenzene, methylene chloride, chloroform, carbon tetrachloride, and tetrachloroethylene; alcohol solvents such as methanol, ethanol, n-propanol, iso-propanol, n-butanol, sec-butanol, and tert-butanol; ketone solvents such as acetone, methyl ethyl ketone, and methyl isobutyl ketone; ester solvents such as ethyl acetate, and dimethyl phthalate; and ether solvents such as dimethyl ether, diethyl ether, di-n-amyl ether, tetrahydrofuran, and dioxyanisole. Alternatively, suspension polymerization or emulsion polymerization may be carried out using water as a solvent. These solvents may be used alone or two or more kinds thereof may be used. By the use of the solvent(s), the reaction solution preferably becomes a homogeneous phase, but may become a plurality of heterogeneous phases.

In order to perform the graft reaction in a region where the liquid containing the base polymer can be homogeneously stirred, the concentration of the base polymer in the liquid is usually set to 50 to 500 g/L, but is preferably set to 200 to 500 g/L to achieve a high graft ratio.

The radical initiator and the carbodiimide monomer may be added all at once to a liquid containing the base polymer (or the base polymer itself) to initiate the graft reaction, but to achieve a high graft ratio, the graft reaction is preferably performed by sequentially adding the radical initiator and the carbodiimide monomer over a period of about 0.1 to 5 hours.

When the radical initiator and the carbodiimide monomer are added to the base polymer or a solution in which the base polymer is dissolved or dispersed in a solvent, the order of addition is not particularly limited. For example, when the radical initiator and the carbodiimide monomer are added sequentially as described above, the radical initiator and the carbodiimide monomer may be added sequentially, or the radical initiator may be added sequentially after the carbodiimide monomer is added first.

The graft reaction is desirably performed at a temperature of usually 60°C or higher, preferably 100°C or higher, and usually 200°C or lower, preferably 160°C or lower, for usually 2 hours or more, preferably 3 hours or more, and usually 10 hours or less, preferably 8 hours or less.

From the present modified product obtained by the graft reaction, the solvent used, the unreacted radical initiator and carbodiimide monomer, and the non-grafted polymer produced as a by-product may be purified and isolated by known methods such as filtration, centrifugation, reprecipitation and/or washing.

In this case, from the viewpoint of, for example, easily obtaining the present composition having more excellent adhesion, the non-grafted polymer that is contained in the present modified product is desirably purified and isolated so that the content thereof becomes preferably 5% by mass or less and more preferably 2% by mass or less.

### <Method for manufacturing present laminate>

A method for manufacturing the laminate varies with, for example, the shape, size, and required properties of the final product and is not particularly limited. However, the laminate is preferably manufactured by a method comprising a step of performing co-extrusion molding, laminate molding, blow molding, or co-injection molding on a resin composition comprising at least one resin selected from the group consisting of a fluororesin, LCP, an ABS-based resin, and a polyketone-based resin and the present composition, from the viewpoint of, for example, easily manufacturing the present laminate having excellent interlayer adhesiveness and desired properties.

As the co-extrusion molding, the laminate molding, the blow molding, and the co-injection molding, conventionally known methods may be employed.

When a resin composition comprising at least one resin selected from the group consisting of a fluororesin and LCP is used, the temperature at the time of manufacturing the laminate is preferably 180°C to 350°C and more preferably 200°C to 320°C.

In addition, when a resin composition comprising at least one resin selected from the group consisting of an ABS-based resin and a polyketone-based resin is used, the temperature at the time of manufacturing the laminate is preferably 170°C to 280°C and more preferably 200°C to 260°C.

Examples of the laminate molding include the following methods (1) and (2).
(1) A method of heat-sealing using, for example, a calender roll molding machine or a compression molding machine at a temperature equal to or higher than a temperature at which at least one of the previously molded layer (A) and layer (B) is melted.
(2) A method of heat-sealing the layer previously molded layer (A) or layer (B) to another layer on which extrusion molding or calender molding is being performed.

At the time of manufacturing a laminate by pressing (heat-sealing) the previously molded layer (A) and layer (B) using a compression molding machine in the method (1), for example, in the case of heat-sealing a modified fluororesin sheet as the layer (A) at 220°C, a layer having a high adhesive strength can be formed even when the heat-sealing time is as short as preferably 60 seconds or less, more preferably 30 seconds or less, still more preferably 15 seconds or less.

In addition, at the time of manufacturing a laminate by pressing (heat-sealing) the previously molded layer (A) and layer (B) using a compression molding machine in the method (1), for example, in the case of heat-sealing a polyketone sheet as the layer (A) at 260°C, a layer having a high adhesive strength can be formed even when the heat-sealing time is as short as preferably 30 seconds or less, more preferably 15 seconds or less.

Examples of the co-extrusion molding include a method of forming the heat-sealed layer (A) and layer (B) by performing extrusion molding on a resin composition comprising at least one resin selected from the group consisting of a fluororesin, LCP, an ABS-based resin, and a polyketone-based resin and the present composition at the same time with a multi-layer extrusion molding machine.

Examples of the co-injection molding include a method of injecting (for example, bilayer injection molding or sandwich injection molding) a resin composition comprising at least one resin selected from the group consisting of a molten fluororesin, LCP, an ABS-based resin, and a polyketone-based resin and the molten present composition into, for example, a mold at the same time or at staggered timing.

### Examples

An embodiment of the present invention will be described below with reference to Examples, but the present invention is not limited to these Examples.

### <Method for measuring graft ratio>

The ¹H-NMR spectrum of a graft polymer obtained in the following synthesis example was obtained using Nuclear Magnetic Resonance Spectrometer AVANCE IIIcryo-500 (500 MHz) made by Bruker Biospin under conditions of measurement solvent: 1,1,2,2-tetrachloroethane-d2, measurement temperature: 120°C, spectrum width: 20 ppm, pulse repetition time: 7.0 seconds, and pulse width: 5.00 µsec (45° pulse). In the obtained spectrum, the graft ratio of the graft polymer obtained in the following synthesis example was calculated from the peak intensity ratio between protons of hydrocarbon groups bonded to carbodiimide groups present in 3.0 ppm to 4.0 ppm and protons bonded to all hydrocarbon groups derived from the base polymer present in 0.3 ppm to 2.5 ppm.

### [Synthesis Example 1]

Into a 500 mL glass vessel, 25.0 g of polypropylene (base polymer, propylene homopolymer, Mw: 313,000, Mn: 70,800, Mw/Mn: 4.42) and 110 mL of xylene were charged, and the inside of the vessel was substituted with nitrogen gas. Thereafter, the internal temperature of the vessel was raised to 120°C, and while maintaining the temperature, 28.1 mmol of vinylphenylcyclohexylcarbodiimide and 2.2 mmol of tert-butylperoxyisopropyl monocarbonate (perbutyl I, manufactured by NOF Corporation) dissolved in 10 mL of xylene were fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the vessel was cooled to 50°C, and then a slurry-like reaction solution was taken out after depressurization. To the obtained reaction solution, 400 mL of acetone was added, and after stirring for 10 minutes, the stirred solution was filtered and separated into solids and filtrate. The step from the addition of acetone to the filtration was further repeated three times on the obtained solids.

The solids after the fourth filtration were dried in a vacuum dryer at 90°C for 10 hours to obtain 25.13 g of a graft polymer (P-1). The graft ratio was 1.5% by mass.

### [Synthesis Example 2]

Into a 500 mL glass vessel, 15.0 g of polypropylene (the same polymer as the base polymer used in Synthesis Example 1) and 62 mL of xylene were charged, and the inside of the vessel was substituted with nitrogen gas. Thereafter, the internal temperature of the vessel was raised to 120°C, and while maintaining the temperature, 22.1 mmol of ethyl-tert-butylcarbodiimide methacrylate was charged, and then 9.2 mmol of tert-butylperoxyisopropyl monocarbonate (perbutyl I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the vessel was cooled to 50°C, and then a slurry-like reaction solution was taken out. To the obtained reaction solution, 400 mL of acetone was added, and after stirring for 10 minutes, the stirred solution was filtered and separated into solids and filtrate. The step from the addition of acetone to the filtration was further repeated three times on the obtained solids.

The solids after the fourth filtration were dried in a vacuum dryer at 90°C for 10 hours to obtain 15.37 g of a graft polymer (P-2). The graft ratio was 1.3% by mass.

### [Synthesis Example 3]

Into a 500 mL glass vessel, 25.0 g of polypropylene (the same polymer as the base polymer used in Synthesis Example 1) and 120 mL of xylene were charged, and the inside of the vessel was substituted with nitrogen gas. Thereafter, the internal temperature of the vessel was raised to 120°C, and while maintaining the temperature, 33.4 mmol of glycidyl methacrylate was charged, and then 11 mmol of tert-butylperoxyisopropyl monocarbonate (perbutyl I, manufactured by NOF Corporation) dissolved in 10 mL of xylene was added dropwise over 10 minutes while stirring at a stirring rate of 400 rpm using a double anchor blade. Thereafter, stirring was further conducted for 3 hours.

Next, 200 mL of xylene was added, the internal temperature of the vessel was slowly cooled to 50°C, then, a slurry-like reaction solution was taken out, and the obtained reaction solution was added to 400 mL of acetone and stirred for 10 minutes. Thereafter, the reaction solution was filtered and separated into solids and filtrate. The obtained solids were washed three times with 400 mL of acetone to remove unreacted glycidyl methacrylate and the homopolymer of glycidyl methacrylate.

The obtained solids were dried in a vacuum dryer at 90°C for 10 hours to obtain 25.26 g of a graft polymer (CP-1).
The graft ratio was 1.0% by mass.

### [Synthesis Example 4]

Into a 500 mL glass vessel, 25.0 g of polypropylene (the same polymer as the base polymer used in Synthesis Example 1) and 110 mL of xylene were charged, and the inside of the vessel was substituted with nitrogen gas. Thereafter, the internal temperature of the vessel was raised to 120°C, and while maintaining the temperature, 33.4 mmol of maleic anhydride was charged, and then 2.2 mmol of tert-butylperoxyisopropyl monocarbonate (perbutyl I, manufactured by NOF Corporation) dissolved in 10 mL of xylene was added dropwise over 10 minutes while stirring at a stirring rate of 400 rpm using a double anchor blade. Thereafter, stirring was further conducted for 3 hours.

Next, 200 mL of xylene was added, the internal temperature of the vessel was slowly cooled to 50°C, then, a slurry-like reaction solution was taken out, and the obtained reaction solution was added to 400 mL of acetone and stirred for 10 minutes. Thereafter, the reaction solution was filtered and separated into solids and filtrate. The obtained solids were washed three times with 400 mL of acetone to remove unreacted maleic anhydride.

The obtained solids were dried in a vacuum dryer at 90°C for 10 hours to obtain 25.01 g of a graft polymer (CP-2).
The graft ratio was 0.62% by mass.

### [Synthesis Example 5]

Into a 500 mL separable flask, 22.5 g of polypropylene (base polymer, Mw: 157,000, Mn: 31,000, Mw/Mn: 5.06) and 62 mL of xylene were charged, and the separable flask was substituted with nitrogen gas. Thereafter, the internal temperature was raised to 120°C, and while maintaining the temperature, 44.2 mmol of ethyl-tert-butylcarbodiimide methacrylate was charged, and then 18.4 mmol of tert-butylperoxyisopropyl monocarbonate (perbutyl I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 100 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The step from the addition of acetone to the filtration was further repeated three times on the obtained solids. Unreacted ethyl-tert-butylcarbodiimide methacrylate and a homopolymer of the ethyl-tert-butylcarbodiimide methacrylate were removed by these four times of filtration.

The solids after the fourth filtration were dried in a vacuum dryer at 90°C for 10 hours to obtain 23.18 g of a graft polymer (P-3). The graft ratio was 4.0% by mass.

### [Synthesis Example 6]

Into a 500 mL glass vessel, 25.0 g of LLDPE (base polymer, comonomer species: 1-hexene, comonomer amount: 1.6% by mass, Mw: 164,000, Mn: 63,000, Mw/Mn: 2.60) and 110 mL of xylene were charged, and the inside of the vessel was substituted with nitrogen gas. Thereafter, the internal temperature of the vessel was raised to 120°C, and while maintaining the temperature, 35.0 mmol of ethyl-tert-butylcarbodiimide methacrylate was charged, and then 2.2 mmol of tert-butylperoxyisopropyl monocarbonate (perbutyl I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the vessel was cooled to 50°C, and then a slurry-like reaction solution was taken out. To the obtained reaction solution, 400 mL of acetone was added, and after stirring for 10 minutes, the stirred solution was filtered and separated into solids and filtrate. The step from the addition of acetone to the filtration was further repeated three times on the obtained solids.

The solids after the fourth filtration were dried in a vacuum dryer at 90°C for 10 hours to obtain 25.49 g of a graft polymer (P-4). The graft ratio was 1.7% by mass.

### <MFR>

The MFRs (g/10 minutes) of the adhesive compositions obtained in the following examples and comparative examples were measured at 190°C and 2.16 kg load according to JIS K 7210.

### <Amount of carbodiimide group>

The amounts (mmol) of the carbodiimide group per 100 g of the adhesive compositions obtained in the following examples and comparative examples were calculated from the following formula (I). The results are shown in Tables 1 to 5 as the amount of the carbodiimide group (mmol/100 g). (Graft ratio [% by mass] of graft-modified product used in adhesive composition/molecular weight of carbodiimide monomer used for synthesis of graft-modified product) × 100 × amount [% by mass] of graft-modified product used in adhesive composition/10

### <Density>

The densities (g/cm³) of the adhesive compositions obtained in the following examples and comparative examples were measured according to JIS K 7210. Results are shown in Tables 1 to 5.

### [Example 1]

12 Parts by mass of the graft polymer (P-1) manufactured in Synthesis Example 1 and 88 parts by mass of polypropylene (the same polymer as the base polymer used in Synthesis Example 1) were kneaded using LABO PLASTOMILL under conditions of a temperature of 190°C, a screw speed of 60 rpm, and a kneading time of 10 minutes, thereby obtaining an adhesive composition C-1.

The obtained adhesive composition C-1 had an MFR (190°C, 2.16 kg load) of 0.6 g/10 minutes and a density of 0.893 g/cm³, and the amount of the carbodiimide group per 100 g of the composition was 0.8 mmol.

### [Example 2]

An adhesive composition C-2 was obtained in the same manner as in Example 1, except that 13 parts by mass of the graft polymer (P-2) manufactured in Synthesis Example 2 and 87 parts by mass of polypropylene (the same polymer as the base polymer used in Synthesis Example 1) were used.

The obtained adhesive composition C-2 had an MFR (190°C, 2.16 kg load) of 2.0 g/10 minutes and a density of 0.892 g/cm³, and the amount of the carbodiimide group per 100 g of the composition was 0.8 mmol.

### [Example 3]

An adhesive composition C-3 was obtained in the same manner as in Example 1, except that 16 parts by mass of the graft polymer (P-3) manufactured in Synthesis Example 5 and 84 parts by mass of polypropylene (the same polymer as the base polymer used in Synthesis Example 5) were used.

The obtained adhesive composition C-3 had an MFR (190°C, 2.16 kg load) of 3.5 g/10 minutes and a density of 0.902 g/cm³, and the amount of the carbodiimide group per 100 g of the composition was 3.1 mmol.

### [Example 4]

An adhesive composition C-4 was obtained in the same manner as in Example 1, except that 16 parts by mass of the graft polymer (P-4) manufactured in Synthesis Example 6 and 84 parts by mass of LLDPE (the same polymer as the base polymer used in Synthesis Example 6) were used.

The obtained adhesive composition C-4 had a density of 0.902 g/cm³, and the amount of the carbodiimide group per 100 g of the composition was 1.3 mmol.

### [Comparative Example 1]

An adhesive composition CC-1 was obtained in the same manner as in Example 1, except that 12 parts by mass of the graft polymer (CP-1) manufactured in Synthesis Example 3 and 88 parts by mass of polypropylene (the same polymer as the base polymer used in Synthesis Example 1) were used.

The obtained adhesive composition CC-1 had an MFR (190°C, 2.16 kg load) of 1.9 g/10 minutes and a density of 0.892 g/cm³, the amount of an epoxy group per 100 g of the composition was 0.8 mmol, and graft-modified products by a carbodiimide monomer were not contained.

### [Comparative Example 2]

An adhesive composition CC-2 was obtained in the same manner as in Example 1, except that 13 parts by mass of the graft polymer (CP-2) manufactured in Synthesis Example 4 and 87 parts by mass of polypropylene (the same polymer as the base polymer used in Synthesis Example 1) were used.

The obtained adhesive composition CC-2 had an MFR (190°C, 2.16 kg load) of 2.1 g/10 minutes and a density of 0.892 g/cm³, the amount of a maleic anhydride group per 100 g of the composition was 0.8 mmol, and graft-modified products by a carbodiimide monomer were not contained.

### [Comparative Example 3]

Lotader (manufactured by Arkema; density: 0.940 g/cm³, amount of epoxy group per 100 g of composition: 56 mmol, graft-modified products by a carbodiimide monomer were not contained) was used as an adhesive composition CC-3.

### <Adhesion evaluation>

### · Production of press sheet

Each of the adhesive compositions obtained in Examples 1 to 2 and Comparative Example 2 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 µm, a length of 80 mm, and a width of 80 mm.

### · Production of fluororesin laminate 1

A modified fluororesin sheet modified with an acid and having a thickness of 500 µm, a length of 80 mm, and a width of 80 mm (product name: Fluon LH-8000, manufactured by AGC Inc.) was used.

The modified fluororesin sheet and the press sheet were laminated in this order, the laminated sheets were sandwiched between Teflon (R) sheets, and heat sealing was performed for 15 seconds, 30 seconds, or 60 seconds using a heat sealer in which the temperature of the upper and lower press plates were set to 220°C to produce a two-layered fluororesin laminate 1.

### · Peeling test

For the produced fluororesin laminate 1, the modified fluororesin sheet and the press sheet were T-peeled from each other under the conditions of a peeling atmosphere temperature of 23°C, a peeling rate of 300 mm/min, and a peel width of 15 mm, and the peel strength between the modified fluororesin sheet and the press sheet was measured. Results are shown in Table 1. The case where the modified fluororesin sheet itself breaks off rather than the interface between the modified fluororesin sheet and the press sheet due to strong adhesive strength is indicated as "fluororesin breakage".

**[Table 1]**

| | Adhesive composition | | | Laminate | |
|---|---|---|---|---|---|
| | Graft polymer | Amount of carbodiimide group (mmol/100g) | Density (g/cm³) | Heat sealing time (seconds) | Peel strength (N/15mm) |
| Example 1 | P-1 | 0.8 | 0.893 | 15 | 5 |
| | | | | 30 | 49.5 |
| | | | | 60 | Fluororesin breakage |
| Example 2 | P-2 | 0.8 | 0.892 | 15 | 53.3 |
| | | | | 30 | 27.1 |
| | | | | 60 | Fluororesin breakage |
| Comparative Example 2 | CP-2 | 0 | 0.892 | 15 | 0 |
| | | | | 30 | 0 |
| | | | | 60 | 0 |

### · Production of press sheet

Each of the adhesive compositions obtained in Examples 2 and 3 and Comparative Examples 1 and 2 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 µm, a length of 80 mm, and a width of 20 mm.

### · Production of fluororesin laminate 2

A modified fluororesin sheet modified with an acid and having a thickness of 100 µm, a length of 80 mm, and a width of 20 mm (product name: Fluon LH-8000, manufactured by AGC Inc.) was used.

The modified fluororesin sheet, the press sheet, and the modified fluororesin sheet were laminated in this order, the laminated sheets were sandwiched between Teflon (R) sheets, and heat sealing was performed for 2 seconds, 3 seconds, or 5 seconds using a heat sealer in which the temperature of the upper and lower press plates were set to 220°C to produce a three-layered fluororesin laminate **2.**

### · Peeling test

For the produced fluororesin laminate 2, the upper-side modified fluororesin sheet (the modified fluororesin sheet on the press sheet (upper) side) and the press sheet were **T-**peeled from each other under the conditions of a peeling atmosphere temperature of 23°C, a peeling rate of 300 mm/min, and a peel width of 15 mm, and the peel strength between the modified fluororesin sheet and the press sheet was measured. Results are shown in Table 2. The case where the modified fluororesin sheet itself breaks off rather than the interface between the modified fluororesin sheet and the press sheet due to strong adhesive strength is indicated as "fluororesin breakage".

**[Table 2]**

| | Adhesive composition | | | Laminate | |
|---|---|---|---|---|---|
| | Graft polymer | Amount of carbodiimide group (mmol/100g) | Density (g/cm³) | Heat sealing time (seconds) | Peel strength (N/15mm) |
| Example 2 | P-2 | 0.8 | 0.892 | 2 | 21.6 |
| | | | | 3 | 33.1 |
| | | | | 5 | Fluororesin breakage |
| Example 3 | P-3 | 3.1 | 0.902 | 2 | 45.6 |
| | | | | 3 | Fluororesin breakage |
| | | | | 5 | Fluororesin breakage |
| Comparative Example 1 | CP-1 | 0 | 0.892 | 2 | 0 |
| | | | | 3 | 2.5 |
| | | | | 5 | 11.8 |
| Comparative Example 2 | CP-2 | 0 | 0.892 | 2 | 0 |
| | | | | 3 | 0 |
| | | | | 5 | 0 |

### · Production of press sheet

Each of the adhesive compositions obtained in Examples 1 and 2 and Comparative Examples 1 and 2 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 µm, a length of 80 mm, and a width of 80 mm.

### · Production of LCP laminate

An LCP sheet having a thickness of 500 µm, a length of 80 mm, and a width of 80 mm (product name: SUMIKASUPER LCP: S6000, manufactured by Sumitomo Chemical Company, Limited) was used.

The LCP sheet and the press sheet were laminated in this order, the laminated sheets were sandwiched between Teflon (R) sheets, and heat sealing was performed for 15 seconds or 30 seconds using a heat sealer in which the temperature of the upper and lower press plates were set to 300°C to produce a two-layered LCP laminate.

### · Peeling test

For the produced LCP laminate, the LCP sheet and the press sheet were T-peeled from each other under the conditions of a peeling atmosphere temperature of 23°C, a peeling rate of 300 mm/min, and a peel width of 15 mm, and the peel strength between the LCP sheet and the press sheet was measured. Results are shown in Table 3.

**[Table 3]**

| | Adhesive composition | | | Laminate | |
|---|---|---|---|---|---|
| | Graft polymer | Amount of carbodiimide group (mmol/100g) | Density (g/cm³) | Heat sealing time (seconds) | Peel strength (N/15mm) |
| Example 1 | P-1 | 0.8 | 0.893 | 15 | 9.8 |
| | | | | 30 | 12.7 |
| Example 2 | P-2 | 0.8 | 0.892 | 15 | 10.1 |
| | | | | 30 | 19 |
| Comparative Example 1 | CP-1 | 0 | 0.892 | 15 | 2 |
| | | | | 30 | 3.5 |
| Comparative Example 2 | CP-2 | 0 | 0.892 | 15 | 0 |
| | | | | 30 | 0 |

### · Production of press sheet

Each of the adhesive compositions obtained in Examples 1, 2, and 4 and Comparative Examples 1 to 3 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 µm, a length of 80 mm, and a width of 80 mm.

### · Production of ABS resin laminate

An ABS resin sheet having a thickness of 500 µm, a length of 80 mm, and a width of 80 mm (product name: UMG ABS: EX18A, manufactured by Techno-UMG Co., Ltd.) was used.

The ABS resin sheet and the press sheet were laminated in this order, the laminated sheets were sandwiched between Teflon (R) sheets, and heat sealing was performed for 30 seconds or 60 seconds using a heat sealer in which the temperature of the upper and lower press plates were set to 230°C to produce a two-layered ABS resin laminate.

### · Peeling test

For the produced ABS resin laminate, the ABS resin sheet and the press sheet were T-peeled from each other under the conditions of a peeling atmosphere temperature of 23°C, a peeling rate of 300 mm/min, and a peel width of 15 mm, and the peel strength between the ABS resin sheet and the press sheet was measured. Results are shown in Table 4.

**[Table 4]**

| | Adhesive composition | | | Laminate | |
|---|---|---|---|---|---|
| | Graft polymer | Amount of carbodiimide group (mmol/100g) | Density (g/cm³) | Heat sealing time (seconds) | Peel strength (N/15mm) |
| Example 1 | P-1 | 0.8 | 0.893 | 30 | 5.1 |
| | | | | 60 | 8.4 |
| Example 2 | P-2 | 0.8 | 0.892 | 30 | 9.4 |
| | | | | 60 | 22.4 |
| Example 4 | P-4 | 1.3 | 0.902 | 30 | 43.9 |
| | | | | 60 | 44.2 |
| Comparative Example 1 | CP-1 | 0 | 0.892 | 30 | 0 |
| | | | | 60 | 0 |
| Comparative Example 2 | CP-2 | 0 | 0.892 | 30 | 0 |
| | | | | 60 | 0 |
| Comparative Example 3 | Lotader | 0 | 0.940 | 30 | 0.1 |
| | | | | 60 | 0.2 |

### · Production of press sheet

Each of the adhesive compositions obtained in Examples 1 and 2 and Comparative Examples 1 and 2 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 µm, a length of 80 mm, and a width of 80 mm.

### · Production of polyketone laminate

A polyketone sheet having a thickness of 500 µm, a length of 80 mm, and a width of 80 mm (product name: AKROTEK: PK-HM, manufactured by AKRO-PLASTIC GmbH) was used.

The polyketone sheet and the press sheet were laminated in this order, the laminated sheets were sandwiched between Teflon (R) sheets, and heat sealing was performed for 15 seconds or 30 seconds using a heat sealer in which the temperature of the upper and lower press plates were set to 230°C or 260°C to produce a two-layered polyketone laminate.

### · Peeling test

For the produced polyketone laminate, the polyketone sheet and the press sheet were T-peeled from each other under the conditions of a peeling atmosphere temperature of 23°C, a peeling rate of 300 mm/min, and a peel width of 15 mm, and the peel strength between the polyketone sheet and the press sheet was measured. Results are shown in Table 5. The case where the polyketone sheet itself breaks off rather than the interface between the polyketone sheet and the press sheet due to strong adhesive strength is indicated as "polyketone resin breakage".

**[Table 5]**

| | Adhesive composition | | | Laminate | | |
|---|---|---|---|---|---|---|
| | Graft polymer | Amount of carbodiimide group (mmol/100g) | Density (g/cm³) | Heat sealing temperature (°C) | Heat sealing time (seconds) | Peel strength (N/15mm) |
| Example 1 | P-1 | 0.8 | 0.893 | 230 | 15 | 2.6 |
| | | | | | 30 | 34.8 |
| | | | | 260 | 15 | 23.8 |
| | | | | | 30 | 52.9 |
| Example 2 | P-2 | 0.8 | 0.892 | 230 | 15 | 45.5 |
| | | | | | 30 | Polyketone resin breakage |
| | | | | 260 | 15 | 62.5 |
| | | | | | 30 | Polyketone resin breakage |
| Comparative Example 1 | CP-1 | 0 | 0.892 | 230 | 15 | 0.7 |
| | | | | | 30 | 0.5 |
| | | | | 260 | 15 | 1.3 |
| | | | | | 30 | 1.1 |
| Comparative Example 2 | CP-2 | 0 | 0.892 | 230 | 15 | 0 |
| | | | | | 30 | 0 |
| | | | | 260 | 15 | 0 |
| | | | | | 30 | 0 |

## Claims

1. A laminate comprising:
a layer (A) comprising at least one resin selected from the group consisting of a fluororesin, a liquid crystal polymer, an acrylonitrile/butadiene/styrene copolymer-based resin, and a polyketone-based resin; and
an adhesive layer (B) comprising an adhesive composition,
wherein at least a part of the adhesive layer (B) is in contact with the layer (A), and
the adhesive composition satisfies the following requirements (i) to (iii):
(i) a graft-modified product of at least one base polymer selected from polyolefins by a carbodiimide monomer having a carbodiimide group and a polymerizable double bond is contained;
(ii) 0.1 to 50 mmol of the carbodiimide group is contained per 100 g of the adhesive composition; and
(iii) a density is 0.870 to 0.940 g/cm³.

2. The laminate according to claim 1, wherein the carbodiimide monomer is at least one monomer selected from the group consisting of a compound represented by the following formula (1) and a compound represented by the following formula (2), 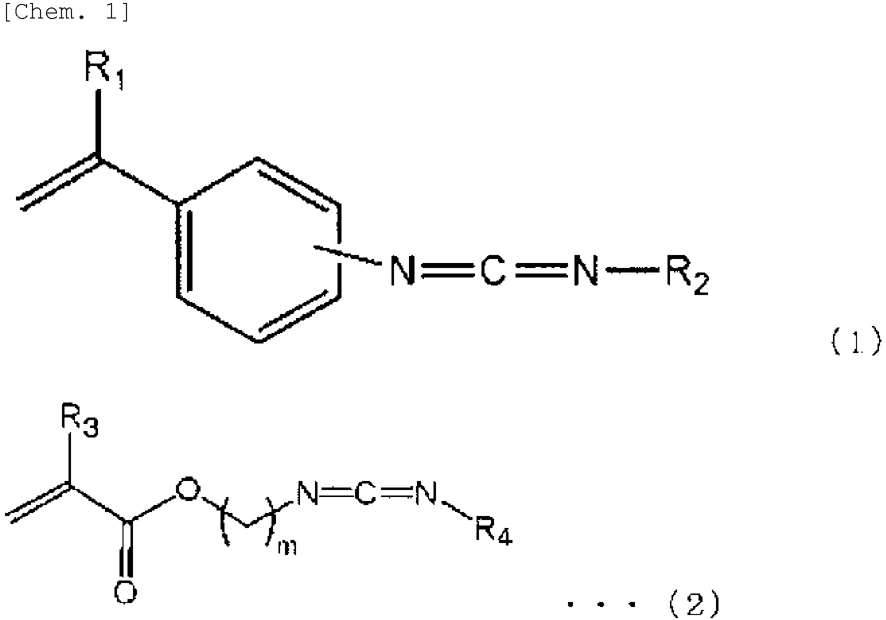
wherein in the formula (1), R₁ is a hydrogen atom or a methyl group, and R₂ is an alkyl group or aryl group optionally having a substituent, and
in the formula (2), R₃ is a hydrogen atom or a methyl group, R₄ is an alkyl group or aryl group optionally having a substituent, and m is an integer of 2 or more.

3. The laminate according to claim 1 or 2, wherein the layer (A) consists of a fluororesin.

4. The laminate according to claim 3, wherein the fluororesin is a modified fluororesin modified with an acid.

5. The laminate according to claim 1 or 2, wherein the layer (A) consists of a liquid crystal polymer.

6. The laminate according to claim 1 or 2, wherein the layer (A) consists of an acrylonitrile/butadiene/styrene copolymer-based resin.

7. The laminate according to claim 1 or 2, wherein the layer (A) consists of a polyketone-based resin.

8. The laminate according to claim 1 or 2 obtained by co-extrusion molding, laminate molding, blow molding, or co-injection molding.

9. A method for manufacturing a laminate,
wherein the laminate has a layer (A) comprising at least one resin selected from the group consisting of a fluororesin, a liquid crystal polymer, an acrylonitrile/butadiene/styrene copolymer-based resin, and a polyketone-based resin and an adhesive layer (B) comprising an adhesive composition,
at least a part of the adhesive layer (B) is in contact with the layer (A),
the manufacturing method comprises a step of performing co-extrusion molding, laminate molding, blow molding, or co-injection molding on a resin composition comprising at least one resin selected from the group consisting of a fluororesin, a liquid crystal polymer, an acrylonitrile/butadiene/styrene copolymer-based resin, and a polyketone-based resin and the adhesive composition, and
the adhesive composition satisfies the following requirements (i) to (iii):
(i) a graft-modified product of at least one base polymer selected from polyolefins by a carbodiimide monomer having a carbodiimide group and a polymerizable double bond is contained;
(ii) 0.1 to 50 mmol of the carbodiimide group is contained per 100 g of the adhesive composition; and
(iii) a density is 0.870 to 0.940 g/cm³.

10. The method for manufacturing a laminate according to claim 9, wherein the carbodiimide monomer is at least one monomer selected from the group consisting of a compound represented by the following formula (1) and a compound represented by the following formula (2), 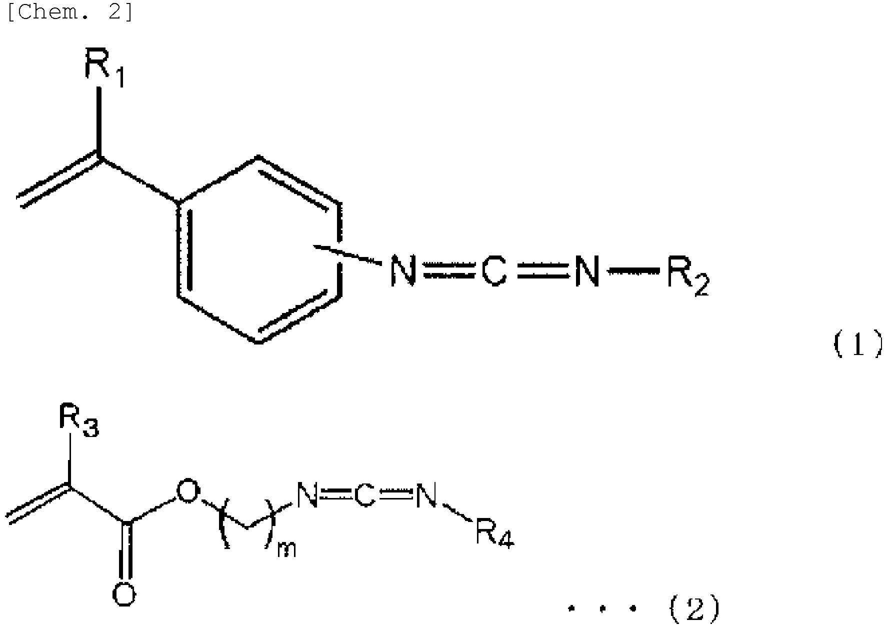
wherein in the formula (1), R₁ is a hydrogen atom or a methyl group, and R₂ is an alkyl group or aryl group optionally having a substituent, and
in the formula (2), R₃ is a hydrogen atom or a methyl group, R₄ is an alkyl group or aryl group optionally having a substituent, and m is an integer of 2 or more.

11. The method for manufacturing a laminate according to claim 9 or 10, wherein the layer (A) consists of a fluororesin.

12. The method for manufacturing a laminate according to claim 11, wherein the fluororesin is a modified fluororesin modified with an acid.

13. The method for manufacturing a laminate according to claim 9 or 10, wherein the layer (A) consists of a liquid crystal polymer.

14. The method for manufacturing a laminate according to claim 9 or 10, wherein the layer (A) consists of an acrylonitrile/butadiene/styrene copolymer-based resin.

15. The method for manufacturing a laminate according to claim 9 or 10, wherein the layer (A) consists of a polyketone-based resin.
